# EUROPEAN PATENT SPECIFICATION

(11) **EP 2 955 073 B1**
(45) Date of publication and mention of the grant of the patent: **20.06.2018**
(21) Application number: 15169967.5
(22) Date of filing: 29.05.2015
(51) Int. Cl.: B60T 17/04, B60D 1/64

(54) **Device for the towing vehicle-trailer connection**
Anordnung zur Verbindung Zugfahrzeug-Anhängerfahrzeug
Système de connection tracteur-remorque

(30) Priority: 30.05.2014 IT MO20140159
(43) Date of publication of application: 16.12.2015
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 2 591 963
- EP-A1- 2 610 122
- EP-A2- 0 167 968
- EP-A2- 2 631 131
- WO-A2-2012/095389
- DE-U1-202006 016 234
- FR-A1- 2 268 674

## Description

The present invention relates to device for the towing vehicle-trailer connection.

As is known, to date towing vehicles are connected to the relative trailer through a connection device comprising a male coupling associated with the towing vehicle and a relative female coupling associated with the trailer.

More particularly, such connection device allows putting in communication the braking system of the towing vehicle with that of the trailer, so that the braking of the towing vehicle operated by the operator also causes the braking of the towed trailer.

The braking system of the trailer is then driven by the braking system of the prime mover in order to synchronize the braking forces acting on same.

Some recently introduced regulations require the connection device between the towing vehicle and its trailer to have a pair of male couplings able to be inserted inside a pair of relative female couplings, of which one is connected to the braking system of the trailer and the other to the parking and/or automatic brake of the trailer itself, in such a way that, if the aforementioned male couplings detach from the relative female couplings, and the oil supply is therefore interrupted to the braking system of the trailer, the relative parking and/or automatic brake starts operating.

More in detail, the female coupling connected to the parking and/or automatic brake of the trailer is able to send oil under pressure to a control device able to maintain deactivated the parking and/or automatic brake itself.

WO 2012/095389 discloses an arrangement for connecting a trailer to a towing vehicle.

The main aim of the present invention is to provide a device for the towing vehicle-trailer connection which allows ensuring automatic activation of the parking and/or automatic brake of the trailer in the event of the male couplings coming out of the relative female couplings even without the driver of the towing vehicle having previously engaged the relative parking and/or automatic brake.

Within this aim, one object of the present invention is to ensure that, in a simple and safe constructive manner, as a result of the coming out of the male couplings from their female couplings, the working fluid sent to the control device of the parking brake of the trailer is unloaded so as to allow the automatic actuation of the parking and/or automatic brake itself.

Another object of the present invention is to provide a device for the towing vehicle-trailer connection which allows to overcome the mentioned drawbacks of the prior art within the ambit of a simple, rational, easy, effective use and low cost solution.

The objects stated above are achieved by the present device for the towing vehicle-trailer connection according to claim 1.

Other characteristics and advantages of the present invention will become better evident from the description of a preferred but not exclusive embodiment of a device for the towing vehicle-trailer connection, illustrated by way of an indicative, but non-limiting, example in the accompanying drawings, in which:

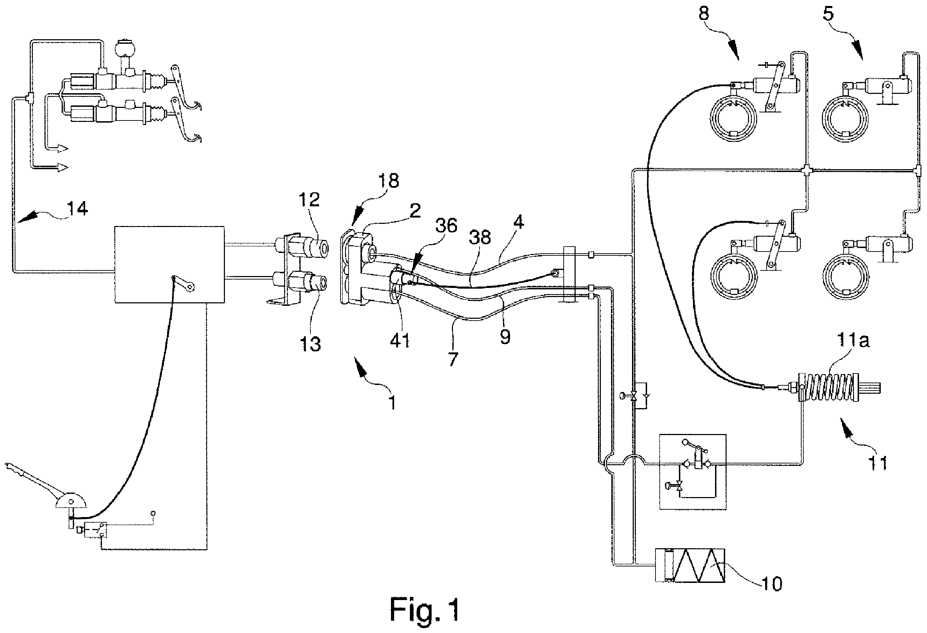

Figure 1 is a diagram representing the hydraulic connections of the device according to the invention;

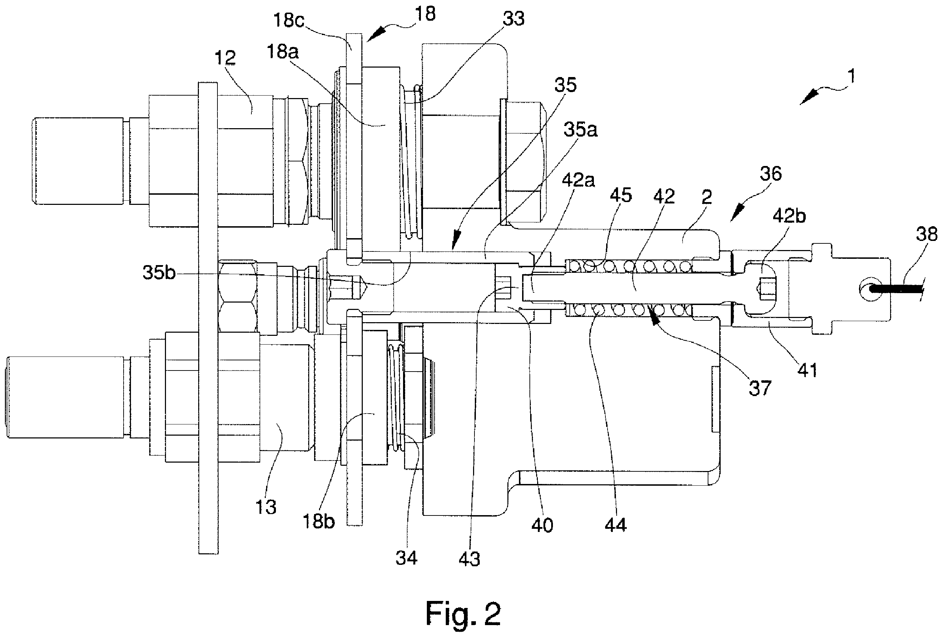

Figure 2 is a side elevation view, partially sectioned, of a device according to the invention with the locking element in the release position;

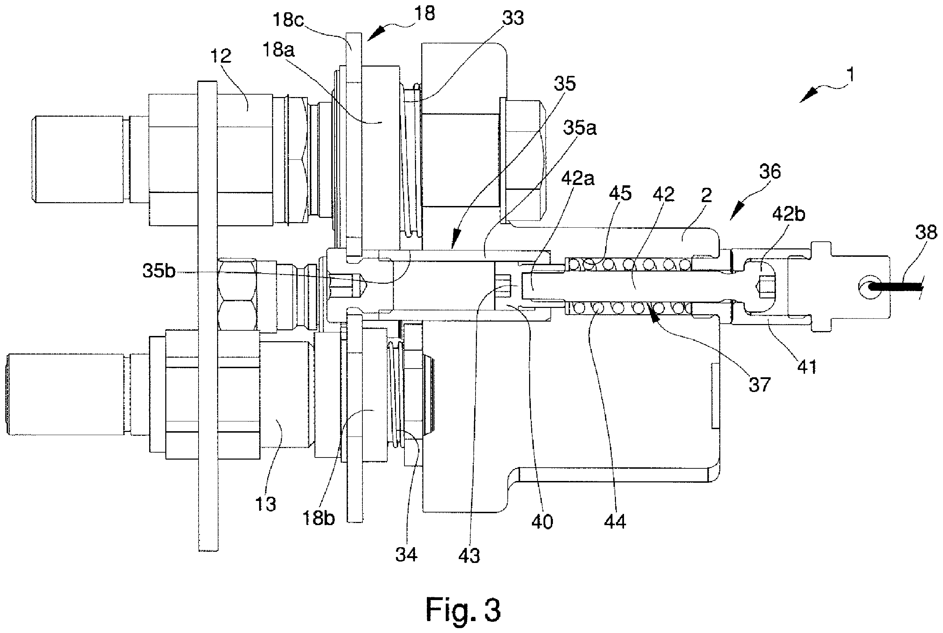

Figure 3 is a side elevation view, partially sectioned, of the device of figure 2 with the locking element in the fastening position;

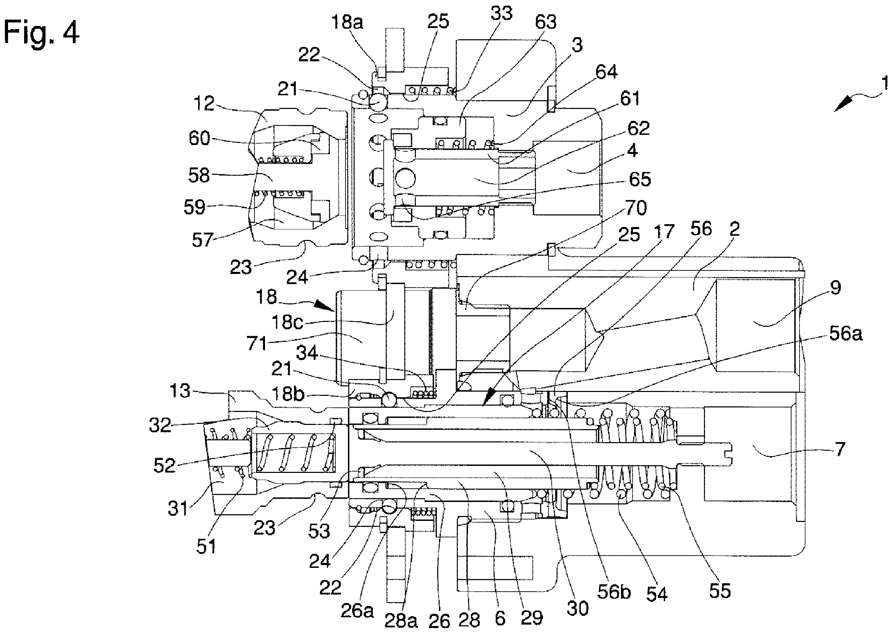

Figure 4 is a sectional view of the device of Figure 2, with the male couplings arranged externally to the relative female couplings;

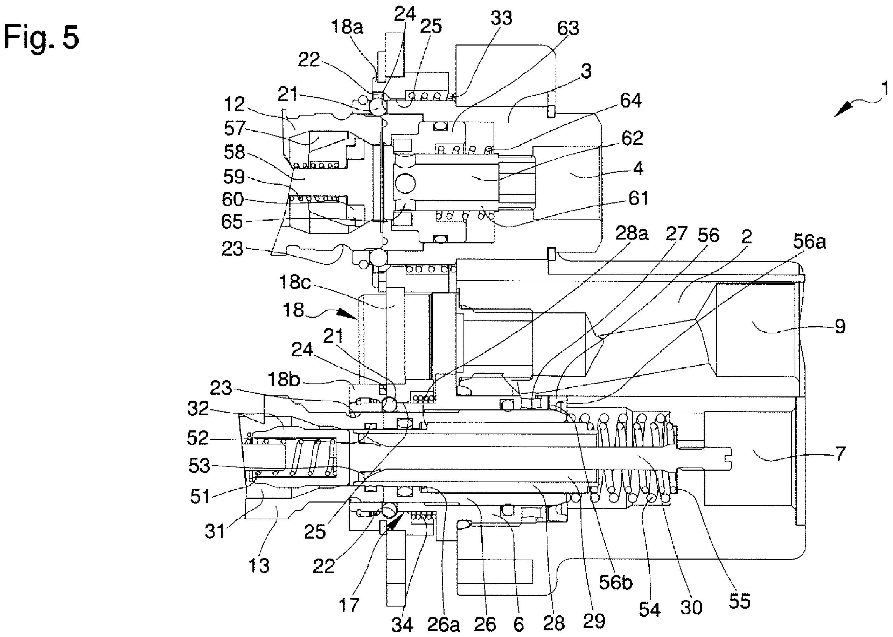

Figure 5 is a sectional view of the coupling of Figure 2, with the male couplings in a first position of insertion inside the relative female couplings;

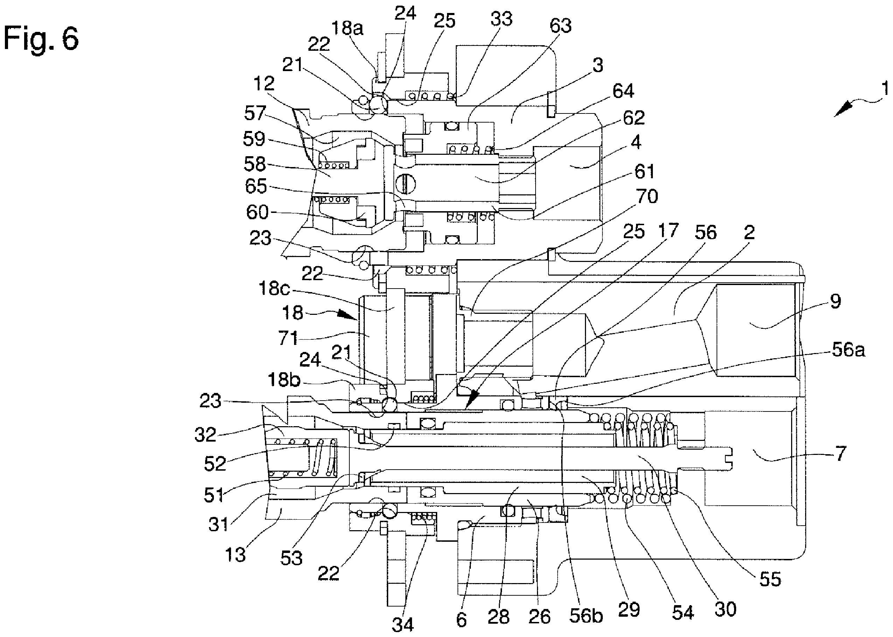

Figure 6 is a sectional view of the device of Figure 2 with the male couplings in a second position of insertion inside the relative female couplings;

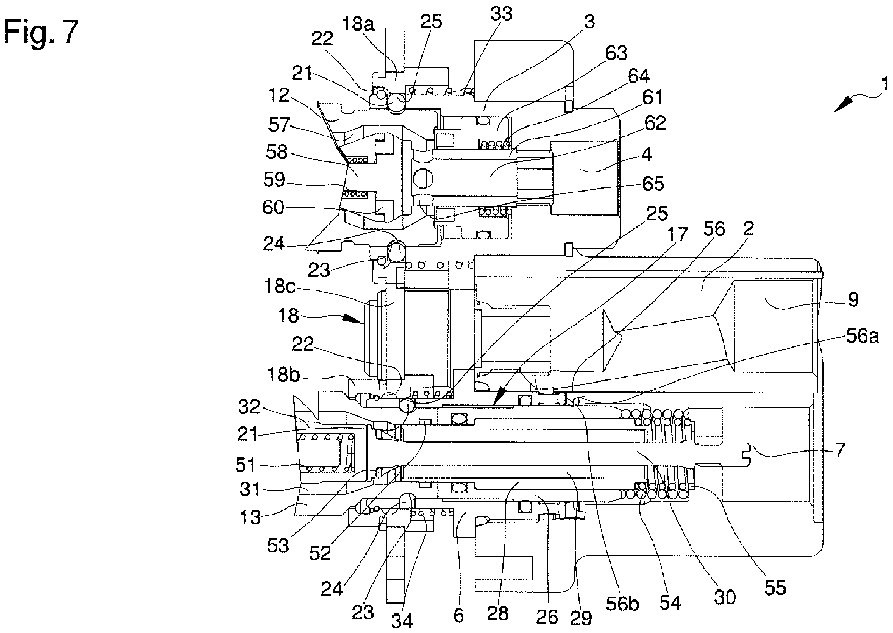

Figure 7 is a sectional view of the device of Figure 2 with the male couplings in the fastening position inside the relative female couplings;

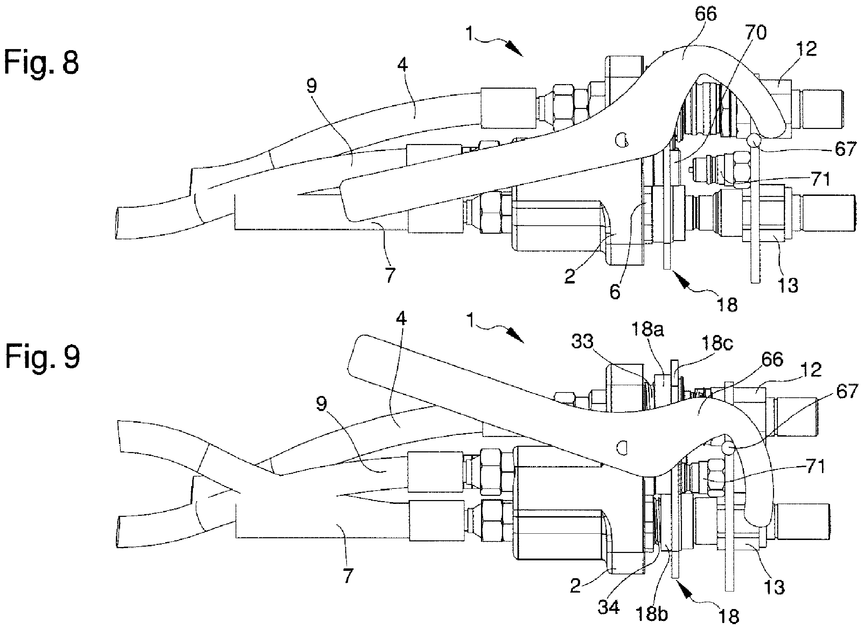

Figure 8 is a side elevation view of a device according to the invention, having the lever means disengaged from the male couplings;
Figure 9 is a side elevation view of the device of Figure 8 with the lever means in engagement with the male couplings.

With particular reference to such figures, globally indicated with reference number 1 is a coupling for the towing vehicle-trailer connection.

The device 1 comprises a base body 2 associable with a trailer (not shown in the illustrations) and wherein is defined at least a first female coupling 3, communicating with a control line 4 connectable to the braking system 5 of the trailer, and at least a second female coupling 6, communicating with at least an additional line 7 connectable to the parking and/or automatic brake 8 of the trailer itself and with at least a by-pass line 9 connectable to an unloading tank 10.

More particularly, the control line 4 is able to supply the braking system 5 of the trailer with a working fluid at a pressure generally between 0 and 150 bar, while the additional line 7 is able to supply a command device 11 of the parking and/or automatic brake 8 at a pressure generally between 15 and 35 bar in such a way as to maintain the parking brake itself open, or deactivated.

The device 1 then comprises also a first and a second male couplings, identified with reference numbers 12 and 13 respectively, which are associable with the braking system 14 of the towing vehicle, and in particular are connectable to valves which are able to send, respectively, a first and a second control signal to the trailer. As is known to experts in the sector, these control signals are pressure signals, i.e., they correspond to the sending of the working fluid towards the first and second male couplings 12 and 13 at a first and at a second pressure, respectively.

More in detail, the first male coupling 12 is able to transmit a first pressure signal for operating the brakes of the trailer while the second male coupling 13 is able to send to the trailer a second substantially constant-pressure signal contained within a predefined range.

In a particular embodiment, not shown in the illustrations, the body 2 also comprises at least a third female coupling 70 intended to receive at least a third male coupling 71 connectable, e.g., to an unloading tank not shown in the illustrations.

Preferably, the tank 10 is of the dynamic type, e.g. of the membrane or spring type, or is able to apply a low backpressure on the working fluid incoming from the by-pass line 9 and is communicating with the control line 4.

The device 1 comprises valve means 17 able to selectively put in communication and isolate between them the additional line 7 and the by-pass line 9 respectively, as a result of the exit and insertion of the second male coupling 13 within the second female couplings 6.

It follows, therefore, that as soon as the male couplings 12 and 13 come out of the female couplings 3 and 6, the additional line 7 is placed in communication with the by-pass line 9, by means of the valve means 17, through which the working fluid contained inside it is unloaded into the tank 10, and so the pressure of the working fluid acting on the command device 11 of the parking brake 8 is reduced thus causing the automatic operation of the same.

More in detail, the command device 11 has two work positions, of which a deactivation position and an activation position of the parking and/or automatic brake and elastic means counteracting the displacement thereof from the activation to the deactivation position.

The additional line 7 is therefore able to send fluid under pressure to the command device 11 when the second male coupling 13 is inserted within the second female coupling 6 so as to compress the elastic means of the command device itself and maintain it in the deactivation position. Following the coming out of the second male coupling 13 from the second female coupling 6 the fluid under pressure present in the additional line 7 is unloaded through the by-pass line 9 so that the command device 11 is pushed by its elastic means in the activation position.

The valve means 17 comprise at least a first tubular element 26 inserted in a sliding manner within the second female coupling 6 to open/close the connection gap 27 between the additional line 7 and the by-pass line 9.

The first tubular element 26 is movable between a release configuration, which corresponds to the position taken by the same following the coming out of the second male coupling 13 from the second female joint 6 and wherein the additional line 7 is placed in communication with the by-pass line 9, and a fastening configuration, wherein the additional line and the by-pass line 9 are mutually isolated. The first tubular element 26 has a plurality of intermediate configurations, which occur following the insertion of the second male coupling 13 within the second female coupling 6 up to the locking of the same, and in which the first tubular element itself interrupts the connection between the additional line 7 and the by-pass line 9.

In the fastening configuration the working fluid present in the additional line 7 is sent to the command device 11 to maintain it in the deactivation position, while in the release configuration the working fluid present in the additional line 7 is unloaded through the by-pass line 9 so that the pressure acting on the elastic means of the command device 11 decreases progressively and the latter is pushed by the elastic means themselves in the activation position.

The second male coupling 13, in turn, defines a first channel 31 of the working fluid and has a first closing element 32 of the first channel itself movable between a relative opening configuration and a relative closing configuration. Conveniently, elastic means 51 are provided able to counteract the displacement of the first closing element 32 to the opening configuration.

The valve means 17 also comprise a second tubular element 28 inserted in a sliding manner within the first tubular element 26 and defining a second channel 29 for the transit of the working fluid, there being provided a second closing element 30 of the second channel itself.

The second tubular element 28 is movable with respect to the second closing element 30 between a closing configuration and an opening configuration of the second channel 29.

As a result of the insertion of the second male coupling 13 within the second female coupling 6, the first closing element 32 is able to contact the second closing element 30 by displacing from the closing configuration to the opening configuration, and the end of the second male coupling itself is able to contact the first tubular element 26 to displace it to the fastening configuration. The first tubular element 26 is able to drag in its displacement the second tubular element 28 to displace it to the relative opening configuration in order to place in communication the first with the second channels 31 and 29 for the transit of the working fluid.

Preferably, the second male coupling 13 comprises first sealing means 52 able to cooperate with the first closing element 32 when the latter is in the closing configuration and able to cooperate with the second tubular element 28 as a result of the insertion of the second male coupling 13 within the second female coupling 6. The first sealing means 52 are arranged at the inner wall of the second male coupling 13 delimiting the first channel 31.

The second closing element 30 then comprises second sealing means 53 able to cooperate with the first tubular element 26 in its closing configuration. Suitably, the end portion of the second closing element 30 facing the second male coupling 13 has a conformation diverging outwards, e.g. of the frusto-conical shape.

Advantageously, the first and second tubular elements 26 and 28 have, respectively, an abutment surface 26a and a counter-abutment surface 28a arranged facing one another. The abutment surface 26a is spaced from the counter-abutment surface 28a in the release configuration of the first tubular element 26, while it is able to contact it as a result of the displacement of the first tubular element itself to the fastening configuration.

Between the first tubular element 26 and the body 2 are placed first elastic means 54 able to counteract the displacement of the first tubular element itself to the fastening configuration.

Second elastic means 55 are also placed between the second tubular element 28 and the body 2 and able to counteract the displacement of the second tubular element itself to the opening configuration.

Preferably, the device 1 comprises at least a sealing element 56 associated with the body 2 and arranged downstream, with respect to the direction of insertion of the second male coupling 13 within the second female coupling 6, of the connection gap 27 between the additional line 7 and the by-pass line 9. This sealing element 56 is able to be contacted by the first tubular element 26 following the insertion of the second male coupling 13 within the second female coupling 6.

Conveniently, the first tubular element 26 is able to contact the sealing element 56 before dragging in its displacement the second tubular element 28. More particularly, the first tubular element 26 is able to contact the sealing element 56 before the abutment surface 26a contacts the counter-abutment surface 28a to drag the second tubular element 28 in translation. The second channel 29 is therefore able to open after the first tubular element 26 achieves the fastening configuration.

More particularly, the sealing element 56 is arranged resting against the body 2 and defines a first groove 56a facing the additional line 7 and at least a second groove 56b facing the body 2, where such second groove 56b is communicating with the by-pass line 9 as a result of the contact of the sealing element 56 with the first tubular element 26. It follows, therefore, that the first groove 56a is subject to a pressure greater than that acting on the second groove 56b, therefore the sealing element 56 is pushed towards the walls of the body 2 so as to remain in place even after the return of the first tubular element 26 to the release configuration.

As can be easily understood, also the first male coupling 12 has a first duct 57 for the transit of the working fluid and a third closing element 58 of the first duct itself, which is movable between an opening and a closing configuration.

Suitably, elastic means 59 are provided able to counteract the displacement of the third closing element 58 to the opening configuration.

More particularly, the third closing element 58 is arranged at the axial extremity of the first duct 57 facing the first female coupling 3.

The third closing element 58 also comprises third sealing means 60 able to cooperate with the inner wall of the first male coupling 12 delimiting the first duct 57 in the closing configuration.

Within the first female coupling 3 is arranged a further tubular element 61 defining a second duct 62 for the transit of the working fluid and a fourth closing element 63 of the second duct itself, which is movable between a relative closing configuration and a relative opening configuration. Suitably, elastic means 64 are provided able to counteract the displacement of the fourth closing element 63 to its opening configuration.

In the embodiment shown in the illustrations, the further tubular element 61 has a plurality of openings 65 arranged at its side surface and the fourth closing element 63 is fitted externally to the further tubular element 61 so as to obstruct the openings 65 in its closing configuration.

Following the insertion of the first male coupling 12 within the first female coupling 3, the third closing element 58 contacts the extremity of the further tubular element 61, moving towards its closing configuration, and the end of the first male coupling 12 is able to contact the fourth closing element 63 to move it to its opening configuration, so as to make the openings 65 accessible and place in communication the first duct 57 with the second duct 62.

The device 1 also comprises a connection element 18 which has at least a first ring nut 18a fitted around the first female coupling 3 and at least a second ring nut 18b fitted around the second female coupling 6, where the first and the second ring nuts 18a and 18b are locked together, e.g. through a plate 18c.

The connection element 18 is movable with respect to the body 2 between an unlocking position, wherein it allows the displacement of the male couplings 12, 13 with respect to the corresponding female couplings 3, 6, and a locking position, wherein it prevents the relative displacement thereof.

According to the invention fastening and release means are also provided able to cooperate with one another to allow the locking and unlocking of the male couplings 12 and 13 with respect to the female couplings 3 and 6 as a result of the connection element 18 achieving the locking position and the unlocking position, respectively.

Advantageously, the fastening and release means comprise at least two locking elements 21 each of which is associated with the body 2 at a relative female coupling 3, 6 and able to cooperate with the male couplings 12, 13 to prevent the displacement thereof with respect to the relative female coupling 3, 6; the connection element 18 being able to keep the locking elements 21 engaged with the relative male couplings 12, 13 in the locking position and to allow disengagement in the unlocking position.

More in particular, the fastening and release means comprise at least a first recess 22 defined on each ring nut 18a, 18b and at least a second recess 23 defined on each male coupling 12, 13.

The locking elements 21 are positioned within a relative through hole 24 defined on the body 2, which contain them laterally, and are able to be inserted within the corresponding second recesses 23 as a result of the insertion of the male couplings 12, 13 within the relative female couplings 3, 6.

The connection element 18 in its locking position keeps pressed the locking elements 21 within the second recesses 23, while in its unlocking position the first recesses 22 are arranged at the locking elements themselves thus allowing the coming out of the male couplings 12, 13 from the relative female couplings 3,6.

More in detail, in the locking position of the connection element 18 the locking elements 21 rest against a relative locator surface 25 defined by the connection element itself and which prevents its displacement from the relative second recess 23, while in the unlocking position of the connection element 18, the first recesses 22, by arranging themselves at the relative locking elements 21, allow the latter to come out of the relative second recesses 23.

In the embodiment represented in the illustrations, the locking elements 21 are of the ball type and the first and second recesses 22 and 23 are shaped like a circumference arc.

Advantageously, elastic means 33, 34 are placed between the body 2 and the connection element 18 and able to counteract the displacement of the latter from the locking position to the unlocking position.

More in particular, the elastic means 33, 34 comprise first elastic means 33 interposed between the body 2 and the first ring nut 18a and second elastic means 34 interposed between the body 2 and the second ring nut 18b.

Preferably, guide means 35 are provided of the displacement of the connection element 18 between the locking position and the unlocking position. The guide means 35 comprise a guide element 35a locked together with the connection element 18, and in particular with the plate 18c, and inserted sliding inside a seat 35b obtained within the body 2. The seat 35b also defines an end-of-stroke surface against which the guide element 35a rests after the connection element 18 has reached the unlocking position.

In the embodiment shown in the illustrations, the guide element 35a is placed between the first and the second ring nuts 18a and 18b.

The guide means 35 are therefore able to keep the plate 18c substantially orthogonal to the axes of the female couplings 3 and 6 during the displacement of the connection element 18 between the locking position and the unlocking position.

Advantageously, the device 1 comprises lever means 66, shown in the illustrations 8 and 9, associated movable with the body 2 and able to act on the male couplings 12, 13 to facilitate the insertion thereof within the relative female couplings 3, 6.

More in detail, the lever means 66, e.g. hook-shaped, are able to act on a pin 67 locked together with the male couplings 12, 13. Following the operation of the lever means 66, the connection element 18 moves from the unlocking position to the locking position.

The device 1 also comprises emergency means 36 able to control the displacement of the connection element 18 from the locking position to the unlocking position as a result of the application of a predefined force on the emergency means themselves.

More in detail, the emergency means 36 comprise at least an actuating element 37 mechanically connected to the connection element 18 and movable with respect to the body 2 between an idle configuration, wherein the connection element 18 can be moved between the locking position and the unlocking position, and an emergency configuration, wherein it is displaced with respect to the idle configuration and drags the connection element 18 to the unlocking position.

The actuating element 37 is connected to a flexible pulling element 38, of the type of an inextensible cable or a rope, connectable on the opposite side to the trailer. The pulling element 38 is able to move the actuating element 37 with respect to the body 2 as a result of the achievement of the above predefined force. For example, in case of the trailer's tow bar breaking, the pulling element 38 is tensioned by applying a force on the actuating element 37.

In the preferred embodiment shown in the illustrations, the actuating element 37 is associated with the guide element 35a, which is movable in translation with respect to the actuating element itself, with the latter in the idle configuration, to displace the connection element 18 from the locking position to the unlocking position.

More in detail, the guide element 35a is internally hollow and the actuating element 37 inserts inside it and defines a locator element 40 able to contact the guide element itself following the displacement from the idle configuration to the emergency configuration.

The emergency means 36 then comprise a joint 41 associated with the actuating element 37 on opposite side of the locator element 40 and connected to the pulling element 38. The joint 41 is therefore able to allow the transfer of the force from the pulling element 38 to the actuating element 37 also in case of a misalignment of same. In particular, the joint 41 is able to rotate with respect to the actuating element 37 by a predefined angle. The ends of stroke of the rotation of the joint 41 with respect to the actuating element 37 are defined by the resting of the joint itself against the body 2. In other words, as a result of the rotation of the joint 41 with respect to the actuating element 37, the joint itself rests against the body 2 and the contact area acts as a fulcrum to allow the transfer of force to the actuating element itself.

More in particular, the actuating element 37 comprises a tie rod 42 inserted through the body 2 and which has a first extremity 42a, with which a nut 43 is associated which inserts within the guide element 35a and the head of which defines the locator element 40, and a second extremity 42b that protrudes from the body itself and with which the joint 41 is associated.

Conveniently, the emergency means 36 comprise further elastic means 44 placed between the actuating element 37 and the body 2 and able to counteract the displacement of the actuating element itself from the idle configuration to the emergency configuration. The further elastic means 44 are, e.g., of the type of a pre-compressed helical spring, inserted within a seat 45 obtained in the body 2 and having an extremity that interacts with the tie rod 42, the latter sliding within the seat 45 by effect of the movement of the actuating element 37, and the opposite extremity which rests against the body 2 or against an element locked with it.

The operation of the present invention is as follows.

Until the male couplings 12 and 13 are arranged externally to the female couplings 3 and 6, the ducts 57 and 62 and the channels 31 and 29 are closed by the relative closing elements 32, 30, 58, 63.

The first tubular element 26 is therefore arranged in the release configuration, therefore the additional line 7 is placed in communication with the by-pass line 9, It follows, therefore, that the working fluid present in the additional line 7 is sent to the tank 10 and that the elastic means 11a not being counteracted by the pressure present in the additional line itself move the command device 11 to the activation position.

Following the insertion of the male couplings 12, 13 within the relative female couplings 3, 6 it happens that the closing elements 32, 30, 58, 63 open progressively the relative ducts 57, 62 and the relative channels 31, 29.

More particularly, the axial extremity of the further tubular element 61 pushes the third closing element 58 in contrast to the elastic means 59 to an opening configuration, which is achieved when the third sealing means 60 deviate from the relative inner wall of the first male coupling 12 by opening the first duct 57.

At the same time, the axial extremity of the first male coupling 12 pushes the fourth closing element 63 in contrast to the elastic means 64 so as to free the openings 65.

When the third sealing means 60 are spaced from the inner wall of the first male coupling 12 and the fourth closing element 63 is in an opening configuration, the working fluid can flow from the first duct 57 to the second duct 62.

Similarly, following the insertion of the second male coupling 13 within the second female coupling 6, the first closing element 32 is pushed towards its opening configuration in contrast to the elastic means 51 due to the contact with the second closing element 30. At the same time, the axial extremity of the second male coupling 13 contacts the first tubular element 26, pushing it from the release configuration to the fastening configuration in contrast to the first elastic means 54. Following this displacement, the first tubular element 26, which in the meantime obstructs the connection gap 27 isolating the additional line 7 from the by-pass line 9, contacts with its abutment surface 26a the counter-abutment surface 28a of the second tubular element 28, so as to drag the latter away from the end portion of the second closing element 30 in contrast to the second elastic means 55. The first tubular element 26 performs a stretch of stroke during which the second tubular element 28 remains stationary, the lenght of which depends on the distance of the surfaces 26a and 28a, in the closing configuration, thus obstructing the second channel 29.

When the first sealing means 52 are detached from the first closing element 32 and move resting against the external surface of the second tubular element 28 and the latter is detached from the second sealing means 53, the first and the second channels 31 and 29 are put in communication with each other so that the working fluid can flow through them. It follows, therefore, that in this working condition, the fluid under pressure incoming from the braking system 14 of the towing vehicle reaches the additional line 7 so as to maintain compressed the elastic means 11a and, consequently, the command device 11 in the deactivation position of the parking and/or automatic brake 8.

When the male couplings 12 and 13 are arranged outside the female couplings 3 and 6, the connection element 18 is in the unlocking position and is maintained in this position by the locking element 21 arranged at the second female coupling 6, which is maintained within the relative first recess 22 by the first tubular element 26, the latter being arranged in idle configuration.

The second ring nut 18b is thus locked with respect to the second female coupling 6 in release position and also locks consequently the first ring nut 18a, which, on the contrary, would be free to move to the fastening position by effect of the force applied by the elastic means 33.

In this work configuration, the connection element 18 is then maintained in the unlocking position and the elastic means 33 and 34 are compressed.

Following the insertion of the male couplings 12, 13 within the relative female couplings 3, 6, the second recesses 23 defined on the pins themselves approach the locking elements 21. As soon as the second recesses 23 arrive at the locking elements 21, the latter are inserted, by effect of their own weight, within the second recesses themselves, consequently freeing the connection element 18 which is pushed by the elastic means 33, 34 into the locking position.

The insertion of the male couplings 12, 13 within the female couplings 3, 6 can be performed manually or by means of the lever means 66 described above.

In this work configuration, the male couplings 12, 13 are locked within the relative female couplings 3, 6, inasmuch as the locking elements 21 are maintained within the relative second recesses 23 by the locator surfaces 25 defined by the connection element 18.

To remove the male couplings 12, 13 from the female couplings 3, 6, the connection element 18 must return to the unlocking position, so that the locking elements 21 can be moved within the relative first recesses 22 by effect of the coming out of the male couplings themselves from the relative female couplings.

The displacement of the connection element 18 from the locking position to the unlocking position can be made manually by acting on the plate 18c.

As mentioned above, in case of the trailer's tow bar breaking or the trailer itself not being fastened properly, the pulling element 38 becomes tensioned by applying a force on the actuating element 37 by means of the joint 41.

In particular, in the event of the pulling element 38 being misaligned with respect to the actuating element 37, the joint 41 rotates with respect to the actuating element 37 until it rests against the body 2 to transfer the tensile force onto the actuating element itself.

As soon as the force applied on the actuating element 37 reaches the intensity corresponding to the preloading of the further elastic means 44, the latter begin to compress and the actuating element itself begins to shift from the idle configuration to the emergency configuration.

During this displacement, the locator element 40 drags, acting on the guide element 35a, the connection element 18, which is in the fastening position, the male couplings 12, 13 being inserted within the relative female couplings 3, 6, to the release position.

In practice it has been ascertained how the described invention achieves the proposed objects and in particular the fact is underlined that the coupling forming the subject of the present invention ensures the unloading of the working fluid present in the additional line following the coming out of the pins from their seats by means of an embodiment which is simple from a constructive viewpoint and reliable in operation.

## Claims

1. Device (1) for the towing vehicle-trailer connection, comprising:
- a base body (2) associable with a trailer and wherein is defined at least a first female coupling (3), provided with a control line (4) connectable to the braking system (5) of the trailer, and at least a second female coupling (6), provided with at least an additional line (7) which acts on the parking brake (8) of the trailer and provided with at least a by-pass line (9) communicating with an unloading tank (10);
- at least a first and a second male couplings (12, 13) associable with a towing vehicle of the trailer and connectable to the relative braking system (14), where said first and second male couplings (12, 13) are connectable to valves able to send to the same, respectively, a working fluid at a first and at a second pressure and are insertable, respectively within said first and second female couplings (3, 6); where said second male coupling (13) defines a first channel (31) for the transit of a working fluid and has a first closing element (32) of said first transit channel (31) movable between an opening configuration and a closing configuration,
- valve means (17) able to put in communication and isolate between them said additional line (7) with said by-pass line (9), respectively, as a result of the exit and the insertion of said male couplings (12, 13) from the relative female couplings (3, 6);
and **characterized by** the fact that said valve means (17) comprise a first tubular element (26) movable in a sliding manner within said second female coupling (6) between a release configuration, wherein said additional line (7) and said by-pass line (9) are mutually communicating, and a fastening configuration, wherein said additional line (7) and said by-pass line (9) are mutually isolated, a second tubular element (28) inserted in a sliding manner within said first tubular element (26) and defining a second channel (29) for the transit of the working fluid, there being provided a second closing element (30) of the second channel itself, said second tubular element (28) being movable with respect to the second closing element itself between a closing configuration and an opening configuration of said second transit channel (29);
and **characterized in that** as a result of the insertion of said second male coupling (13) within said second female coupling (6), said second closing element (30) is able to contact said first closing element (32) to displace it from the closing configuration to the opening configuration, and the end of the second male coupling itself is able to contact said first tubular element (26) to displace it to said fastening configuration, said first tubular element (26) being able to drag in its displacement said second tubular element (28) to displace it to the relative opening configuration in order to place in communication said first and second transit channels (31, 29) together.

2. Device (1) according to claim 1, **characterized in that** said first and second tubular elements (26, 28) have, respectively, an abutment surface (26a) and a counter-abutment surface (28a) arranged facing one another, said abutment surface (26a) being spaced from said counter-abutment surface (28a) in the release configuration and being able to contact it as a result of the displacement of said first tubular element (26) to the fastening configuration.

3. Device (1) according to claim 2, **characterized in that** said abutment surface (26a) is able to contact said counter-abutment surface (28a) as a result of the achievement of the fastening configuration by said first tubular element (26).

4. Device (1) according to one or more of the preceding claims, **characterized in that** it comprises first elastic means (54) placed between said first tubular element (26) and said body (2) and able to counteract the displacement of the first tubular element itself to the fastening configuration.

5. Device (1) according to one or more of the preceding claims, **characterized in that** it comprises second elastic means (55) placed between said second tubular element (28) and said body (2) and able to counteract the displacement of the second tubular element itself to the relative opening configuration.

6. Device (1) according to one or more of the preceding claims, **characterized in that** said second male coupling (13) comprises first sealing means (52) able to cooperate with said first closing element (32) when the latter is in closing configuration and able to cooperate with said second tubular element (28) as a result of the insertion of the second male coupling itself within said second female coupling (6).

7. Device (1) according to one or more of the preceding claims, **characterized in that** said second closing element (30) comprises second sealing means (53) able to cooperate with said first tubular element (26) in its closing configuration.

8. Device (1) according to one or more of the preceding claims, **characterized in that** the end portion of said second closing element (30) facing said second male coupling (13) has a conformation diverging outwards.

9. Device (1) according to one or more of the preceding claims, **characterized in that** said base body (2) comprises at least a third female coupling and **in that** it comprises a third male coupling able to be inserted within said third female coupling.

10. Device (1) according to one or more of the preceding claims, **characterized in that** it comprises at least a sealing element (56) associated with said body (2) and arranged downstream, with respect to the direction of insertion of said second male coupling (13) within said second female coupling (6), of the connection gap (27) between said additional line (7) and said by-pass line (9), said first tubular element (26) being able to contact said sealing element (56) in its displacement to the fastening configuration to mutually isolate said additional line (7) and said by-pass line (9).

11. Device (1) according to claim 10, **characterized in that** said first tubular element (26) is able to drag in its displacement said second tubular element (28) after the interaction with said sealing element (56).

12. Device (1) according to claim 10 or 11, **characterized in that** said sealing element (56) defines at least a first groove (56a) facing said additional line (7) and at least a second groove (56b) facing a wall of said body (2), as a result of the achievement of the fastening configuration by said first tubular element (26), said second groove (56b) being placed in communication with said by-pass line (9) and the pressure applying on it being less than that applying on said first groove (56a).

## Patentansprüche

1. Vorrichtung (1) für die Zugfahrzeug-Anhänger-Verbindung, umfassend:
- einen Basiskörper (2), der mit einem Anhänger verbunden sein kann, und in dem mindestens eine erste Kupplungsbuchse (3), die mit einer Steuerleitung (4) versehen ist, die mit dem Bremssystem (5) des Anhängers verbunden werden kann, und mindestens eine zweite Kupplungsbuchse (6), die mit mindestens einer Zusatzleitung (7), die auf die Feststellbremse (8) des Anhängers wirkt, und mit mindestens einer Bypass-Leitung (9), die mit einem Entladetank (10) in Verbindung steht, versehen ist, ausgebildet ist;
- mindestens einen ersten und einen zweiten Kupplungsstecker (12, 13), die mit einem Zugfahrzeug des Anhängers verbunden sein können und mit dem jeweiligen Bremssystem (14) verbunden sein können, wobei der erste und zweite Kupplungsstecker (12, 13) mit Ventilen verbunden sein können, die in der Lage sind, ein Arbeitsfluid mit einem ersten und einem zweiten Druck jeweils an diese zu leiten, und jeweils in die erste und zweite Kupplungsbuchse (3, 6) eingeführt werden können; wobei der zweite Kupplungsstecker (13) einen ersten Kanal (31) zum Leiten eines Arbeitsfluids bildet und ein erstes Schließelement (32) des ersten Durchgangskanals (31) aufweist, das zwischen einer Öffnungskonfiguration und einer Schließkonfiguration bewegt werden kann,
- Ventilmittel (17), die dazwischen jeweils die Zusatzleitung (7) mit der Bypass-Leitung (9) verbinden oder isolieren können, indem die Kupplungsstecker (12, 13) aus den jeweiligen Kupplungsbuchsen (3, 6) entfernt oder in diese eingeführt werden;
und **dadurch gekennzeichnet, dass** die Ventilmittel (17) ein erstes rohrförmiges Element (26), das sich auf gleitende Weise in der zweiten Kupplungsbuchse (6) zwischen einer Freigabekonfiguration, in der die Zusatzleitung (7) und die Bypass-Leitung (9) miteinander verbunden sind, und einer Befestigungskonfiguration, in der die Zusatzleitung (7) und die Bypass-Leitung (9) voneinander isoliert sind, bewegen kann, ein zweites rohrförmiges Element (28), das auf gleitende Weise in das erste rohrförmige Element (26) eingeführt wird und einen zweiten Kanal (29) zum leiten des Arbeitsfluids bildet, umfassen, wobei ein eigenes zweites Schließelement (30) des zweiten Kanals vorgesehen ist, wobei sich das zweite rohrförmige Element (28) bezüglich des zweiten Schließelements selbst zwischen einer Schließkonfiguration und einer Öffnungskonfiguration des zweiten Durchgangskanals (29) bewegen kann;
und **dadurch gekennzeichnet, dass** durch das Einführen des zweiten Kupplungssteckers (13) in die zweite Kupplungsbuchse (6) das zweite Schließelement (30) in der Lage ist, mit dem ersten Schließelement (32) in Verdingung zu stehen, um es von der Schließkonfiguration in die Öffnungskonfiguration zu verlagern, und das Ende des zweiten Kupplungssteckers selbst in der Lage ist, mit dem ersten rohrförmigen Element (26) in Verbindung zu stehen, um es in die Befestigungskonfiguration zu verlagern, wobei das erste rohrförmige Element (26) in der Lage ist, das zweite rohrförmige Element (28) durch seine Verlagerung zu ziehen, um es in die entsprechende Öffnungskonfiguration zu verlagern, um die ersten und zweiten Durchgangskanäle (31, 29) miteinander zu verbinden.

2. Vorrichtung (1) nach Anspruch 1, **dadurch gekennzeichnet, dass** die ersten und zweiten rohrförmigen Elemente (26, 28) jeweils eine Anlagefläche (26a) und eine Anlagegegenfläche (28a) aufweisen, die derart ausgerichtet sind, dass sie einander zugewandt sind, wobei die Anlagefläche (26a) in der Freigabekonfiguration von der Anlagegegenfläche (28a) beabstandet ist, und in der Lage ist, diese aufgrund der Verlagerung des ersten rohrförmigen Elements (26) in die Befestigungskonfiguration zu berühren.

3. Vorrichtung (1) nach Anspruch 2, **dadurch gekennzeichnet, dass** die Anlagefläche (26a) in der Lage ist, die Anlagegegenfläche (28a) aufgrund des Erreichens der Befestigungskonfiguration von dem ersten rohrförmigen Element (26) zu berühren.

4. Vorrichtung (1) nach einem oder mehreren der vorhergehenden Ansprüche, **dadurch gekennzeichnet, dass** diese erste elastische Mittel (54) aufweist, die sich zwischen dem ersten rohrförmigen Element (26) und dem Körper (2) befinden und in der Lage sind, gegen die Verlagerung des ersten rohrförmigen Elements selbst in die Befestigungskonfiguration zu wirken.

5. Vorrichtung (1) nach einem oder mehreren der vorhergehenden Ansprüche, **dadurch gekennzeichnet, dass** diese zweite elastische Mittel (55) aufweist, die sich zwischen dem zweiten rohrförmigen Element (28) und dem Körper (2) befinden und in der Lage sind, gegen die Verlagerung des zweiten rohrförmigen Elements selbst in die Öffnungskonfiguration zu wirken.

6. Vorrichtung (1) nach einem oder mehreren der vorhergehenden Ansprüche, **dadurch gekennzeichnet, dass** der zweite Kupplungsstecker (13) erste Abdichtungsmittel (52) aufweist, die in der Lage sind, mit dem ersten Schließelement (32) zusammenzuwirken, wenn sich dieses in der Schließkonfiguration befindet, und in der Lage sind, mit dem zweiten rohrförmigen Element (28) zusammenzuwirken, aufgrund dessen, dass der zweite Kupplungsstecker selbst in die zweite Kupplungsbuchse (6) eingeführt wird.

7. Vorrichtung (1) nach einem oder mehreren der vorhergehenden Ansprüche, **dadurch gekennzeichnet, dass** das zweite Schließelement (30) zweite Abdichtungsmittel (53) aufweist, die in der Lage sind, mit dem ersten rohrförmigen Element (26) in seiner Schließkonfiguration zusammenzuwirken.

8. Vorrichtung (1) nach einem oder mehreren der vorhergehenden Ansprüche, **dadurch gekennzeichnet, dass** der Endabschnitt des zweiten Schließelements (3), das dem zweiten Kupplungsstecker (13) zugewandt ist, eine nach außen auseinanderlaufende Form aufweist.

9. Vorrichtung (1) nach einem oder mehreren der vorhergehenden Ansprüche, **dadurch gekennzeichnet, dass** der Basiskörper (2) mindestens eine dritte Kupplungsbuchse aufweist, und dass er einen dritten Kupplungsstecker aufweist, der in die dritte Kupplungsbuchse eingeführt werden kann.

10. Vorrichtung (1) nach einem oder mehreren der vorhergehenden Ansprüche, **dadurch gekennzeichnet, dass** diese mindestens ein Abdichtungselement (56) aufweist, das dem Körper (2) zugeordnet und bezüglich der Einführungsrichtung des zweiten Kupplungssteckers (13) in die zweite Kupplungsbuchse (6) stromabwärts des Verbindungsspalts (27) zwischen der Zusatzleitung (7) und der Bypass-Leitung (9) angeordnet ist, wobei das erste rohrförmige Element (26) in der Lage ist, mit dem Abdichtungselement (56) in seiner Verlagerung in die Befestigungskonfiguration in Verbindung zu stehen, um die Zusatzleitung (7) und die Bypass-Leitung (9) voneinander zu isolieren.

11. Vorrichtung (1) nach Anspruch 10, **dadurch gekennzeichnet, dass** das erste rohrförmige Element (26) in der Lage ist, das zweite rohrförmige Element (28) durch seine Verlagerung nach dem Zusammenwirken mit dem Abdichtungselement (56) zu ziehen.

12. Vorrichtung (1) nach Anspruch 10 oder 11, **dadurch gekennzeichnet, dass** das Abdichtungselement (56) mindestens eine Kerbe (56a), die der Zusatzleitung (7) zugewandt ist, und mindestens eine zweite Kerbe (56b), die einer Wand des Körpers (2) zugewandt ist, dadurch ausbildet, dass das erste rohrförmige Element (26) die Befestigungskonfiguration erreicht, wobei die zweite Kerbe (56b) in Verbindung mit der Bypass-Leitung (9) gebracht wird und der Druck, der angelegt wird, geringer ist als der Druck, der an die erste Kerbe (56a) angelegt wird.

## Revendications

1. Dispositif (1) de connexion tracteur-remorque, comprenant :
- un corps de base (2) apte à être associé à une remorque et dans lequel est défini au moins un premier raccord femelle (3), muni d'une ligne de commande (4) apte à être reliée au système de freinage (5) de la remorque, et au moins un second raccord femelle (6), muni d'au moins une ligne supplémentaire (7) qui agit sur le frein de stationnement (8) de la remorque et muni d'au moins une ligne de dérivation (9) en communication avec un réservoir de décharge (10);
- au moins un premier et un second raccords mâles (12, 13) aptes à être associés à un véhicule tracteur de la remorque et aptes à être raccordés au système de freinage associé (14), dans lequel lesdits premier et second raccords mâles (12, 13) sont aptes à être raccordés à des valves aptes à envoyer à ceux-ci, respectivement, un fluide de travail à une première et à une deuxième pression et sont aptes à être insérés, respectivement dans lesdits premier et second raccords femelles (3, 6) ; dans lequel ledit second raccord mâle (13) définit un premier canal (31) pour le passage d'un fluide de travail et possède un premier élément de fermeture (32) dudit premier canal de passage (31) pouvant être déplacé entre une configuration d'ouverture et une configuration de fermeture,
- des moyens de valve (17) aptes à mettre en communication et à isoler entre elles ladite ligne supplémentaire (7) de ladite ligne de dérivation (9), respectivement, suite au retrait et à l'insertion desdits raccords mâles (12, 13) des raccords femelles associés (3, 6) ;
et **caractérisé en ce que** lesdits moyens de valve (17) comprennent un premier élément tubulaire (26) pouvant être déplacé de manière coulissante à l'intérieur dudit second raccord femelle (6) entre une configuration de libération, dans laquelle ladite ligne supplémentaire (7) et ladite ligne de dérivation (9) sont en communication réciproque, et une configuration d'attache, dans laquelle ladite ligne supplémentaire (7) et ladite ligne de dérivation (9) sont mutuellement isolées, un second élément tubulaire (28) inséré de manière coulissante à l'intérieur dudit premier élément tubulaire (26) et définissant un second canal (29) pour le passage du fluide de travail, un second élément de fermeture (30) du second canal lui-même étant prévu ici, ledit second élément tubulaire (28) étant mobile par rapport au second élément de fermeture lui-même entre une configuration de fermeture et une configuration d'ouverture dudit second canal de passage (29) ;
et **caractérisé en ce que** suite à l'insertion dudit second raccord mâle (13) dans ledit second raccord femelle (6), ledit second élément de fermeture (30) est apte à entrer en contact avec ledit premier élément de fermeture (32) afin de le déplacer de la configuration de fermeture vers la configuration d'ouverture, et l'extrémité du second raccord mâle lui-même est apte à entrer en contact avec ledit premier élément tubulaire (26) afin de le déplacer vers ladite configuration d'attache, ledit premier élément tubulaire (26) étant apte à traîner lors de son déplacement ledit second élément tubulaire (28) afin de le déplacer vers la configuration d'ouverture associée afin de mettre en communication lesdits premier et second canaux de passage (31, 29) entre eux.

2. Dispositif (1) selon la revendication 1, **caractérisé en ce que** lesdits premier et second éléments tubulaires (26, 28) possèdent, respectivement, une surface de butée (26a) et une surface de contre-butée (28a) agencées l'une en regard de l'autre, ladite surface de butée (26a) étant espacée de ladite surface de contre-butée (28a) dans la configuration de libération et apte à entrer en contact avec elle suite au déplacement dudit premier élément tubulaire (26) vers la configuration d'attache.

3. Dispositif (1) selon la revendication 2, **caractérisé en ce que** ladite surface de butée (26a) est apte à entrer en contact avec ladite surface de contre-butée (28a) suite à l'accomplissement de la configuration d'attache par ledit premier élément tubulaire (26).

4. Dispositif (1) selon l'une ou plusieurs des revendications précédentes, **caractérisé en ce qu'**il comprend des premiers moyens élastiques (54) placés entre ledit premier élément tubulaire (26) et ledit corps (2) et aptes à contrer le déplacement du premier élément tubulaire lui-même vers la configuration d'attache.

5. Dispositif (1) selon l'une ou plusieurs des revendications précédentes, **caractérisé en ce qu'**il comprend des seconds moyens élastiques (55) placés entre ledit second élément tubulaire (28) et ledit corps (2) et aptes à contrer le déplacement du second élément tubulaire lui-même vers la configuration d'ouverture associée.

6. Dispositif (1) selon l'une ou plusieurs des revendications précédentes, **caractérisé en ce que** ledit second raccord mâle (13) comprend des premiers moyens d'étanchéité (52) aptes à coopérer avec ledit premier élément de fermeture (32) lorsque celui-ci est en configuration de fermeture et aptes à coopérer avec ledit second élément tubulaire (28) suite à l'insertion du second raccord mâle lui-même dans ledit second raccord femelle (6).

7. Dispositif (1) selon l'une ou plusieurs des revendications précédentes, **caractérisé en ce que** ledit second élément de fermeture (30) comprend des seconds moyens d'étanchéité (53) aptes à coopérer avec ledit premier élément tubulaire (26) dans sa configuration de fermeture.

8. Dispositif (1) selon l'une ou plusieurs des revendications précédentes, **caractérisé en ce que** la portion d'extrémité dudit second élément de fermeture (30) en regard dudit second raccord mâle (13) présente une conformation s'évasant vers l'extérieur.

9. Dispositif (1) selon l'une ou plusieurs des revendications précédentes, **caractérisé en ce que** ledit corps de base (2) comprend au moins un troisième raccord femelle et **en ce qu'**il comprend un troisième raccord mâle apte à être inséré dans ledit troisième raccord femelle.

10. Dispositif (1) selon l'une ou plusieurs des revendications précédentes, **caractérisé en ce qu'**il comprend au moins un élément d'étanchéité (56) associé audit corps (2) et agencé en aval, par rapport à la direction d'insertion dudit second raccord mâle (13) dans ledit second raccord femelle (6), de l'interstice de liaison (27) entre ladite ligne supplémentaire (7) et ladite ligne de dérivation (9), ledit premier élément tubulaire (26) étant apte à entrer en contact avec ledit élément d'étanchéité (56) lors de son déplacement vers la configuration d'attache afin d'isoler mutuellement ladite ligne supplémentaire (7) et ladite ligne de dérivation (9).

11. Dispositif (1) selon la revendication 10, **caractérisé en ce que** ledit premier élément tubulaire (26) est apte à traîner lors de son déplacement ledit second élément tubulaire (28) suite à l'interaction avec ledit élément d'étanchéité (56).

12. Dispositif (1) selon la revendication 10 ou 11, **caractérisé en ce que** ledit élément d'étanchéité (56) définit au moins une première rainure (56a) en regard de ladite ligne supplémentaire (7) et au moins une seconde rainure (56b) en regard d'une paroi dudit corps (2), suite à l'accomplissement de la configuration d'attache par ledit premier élément tubulaire (26), ladite seconde rainure (56b) étant placée en communication avec ladite ligne de dérivation (9) et la pression s'y appliquant étant inférieure à celle s'appliquant sur ladite première rainure (56a).
